# EUROPEAN PATENT SPECIFICATION

(11) **EP 4 456 479 B1**
(45) Date of publication and mention of the grant of the patent: **01.07.2026**
(21) Application number: 23216333.7
(22) Date of filing: 13.12.2023
(51) Int. Cl.: H04L 9/40

(54) **APPARATUS, DEVICE, METHOD, AND COMPUTER PROGRAM FOR A NETWORK ELEMENT**
APPARAT, VORRICHTUNG, VERFAHREN UND COMPUTERPROGRAMM FÜR EIN NETZWERKELEMENT
APPAREIL, DISPOSITIF, PROCÉDÉ ET PROGRAMME INFORMATIQUE POUR UN ÉLÉMENT DE RÉSEAU

(30) Priority: 28.04.2023 US 202318308699
(43) Date of publication of application: 30.10.2024
(73) Proprietor: INTEL Corporation, Santa Clara, CA 95054 (US)
(72) Inventor: HIREMATH, Chetan, Portland, 97229 (US); BROWNE, John J., Limerick, V94 C44N (IE); THOMAS, Greg, Annacotty, V94 Y7C9 (IE); GLUSTSOV, Andriy, San Diego, 92130 (US); MCCARTHY, Peter, Ennis, V95FF24 (IE); DEEP AJMERA, Vishal, 560102 Bangalore (IN); TOSH, Bibhuti Bhusan, 411013 Pune (IN)
(74) Representative: 2SPL Patentanwälte PartG mbB

(56) References cited:
- US-A1- 2016 119 374
- US-A1- 2022 086 691
- US-B1- 7 778 194

## Description

### Background

Application detection is a mechanism in which a communication between a client and a server is detected (including the start and stop of said communication) and a unique classification is applied to all packets in that communication. It is, for example, a function of the 5G (3^{rd} Generation Partnership Project, 3GPP, 5^{th} Generation cellular network) UPF (User Plane Function), which enables forwarding and/or quality enforcement of users' data and many other functionalities within the 5G core network.

In Transport Layer Security (TLS) 1.3, a cryptographic protocol that is used to establish a secure connection between a client and a server, application detection is made more difficult, as some of the communication performed during the TLS handshake that was previously in clear text is now also encrypted. In some cases, application detection was performed using information included in the previously unencrypted communication, such as the Server Certificate message of the TLS handshake. Therefore, TLS 1.3 traffic often cannot have application detection performed on it as defined by 3GPP standards.

To work around this, a full-forward proxy may be used, which sits in the middle between the client and server to allow decryption of the client connection to extract the relevant information. For example, firewalls sometimes employ a full-forward proxy in order to decrypt the traffic between a client and a server. Using this mechanism, it is possible to decrypt and parse the Server Certificate for the purposes of performing application detection. However, a trust Certificate would be required to be installed on the client machines to allow establishment of the connection with the intermediate proxy. Moreover, just to decrypt the server certificate, the proxy might have to handle all the packets in the uplink and downlink directions from the client /server during the lifetime of the flow, doubling the amount of encryption/decryption operations (once by client/server once by proxy), which increases the compute resources required. Moreover, such a proxy would have access to all information in the TLS connection, which may be open to abuse, and which would degrade the cryptographic security levels of the end points. Moreover, there may be windows of cleartext data which are vulnerable to various attacks. In such an approach, just for policing and classification, a huge amount of compute and accelerator resources may be wasted by such a proxy.

US 2022/0086691 A1 and US 2016/0119374 A1 have been cited by European Patent Office.

### Summary

The object of this application is addressed by methods and apparatuses in accordance with the independent claims.

### Brief description of the Figures

Some examples of apparatuses and/or methods will be described in the following by way of example only, and with reference to the accompanying figures, in which:
- Fig. 1a: shows a schematic diagram of an example of an apparatus or device for a network element, a network element comprising such an apparatus or device, and a system comprising such a network element;
- Fig. 1b: shows a flow chart of an example of a method for a network element;
- Fig. 2: shows a diagram of a conventional communication between a TLS 1.3 client and a TLS server via a network element;
- Fig. 3: shows a diagram of a communication between a TLS 1.3 client and a TLS server via a network element according to an example of the proposed concept; and
- Figs. 4a-1, 4a-2 and 4b: show a more detailed diagram of a communication between a TLS 1.3 client and a TLS server via a network element according to an example of the proposed concept.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

In the following description, specific details are set forth, but examples of the technologies described herein may be practiced without these specific details. Well-known circuits, structures, and techniques have not been shown in detail to avoid obscuring an understanding of this description. "An example/example," "various examples/examples," "some examples/examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform, or resource, even though the instructions contained in the software or firmware are not actively being executed by the system, device, platform, or resource.

The description may use the phrases "in an example/example," "in examples/examples," "in some examples/examples," and/or "in various examples/examples," each of which may refer to one or more of the same or different examples. Furthermore, the terms "comprising," "including," "having," and the like, as used with respect to examples of the present disclosure, are synonymous.

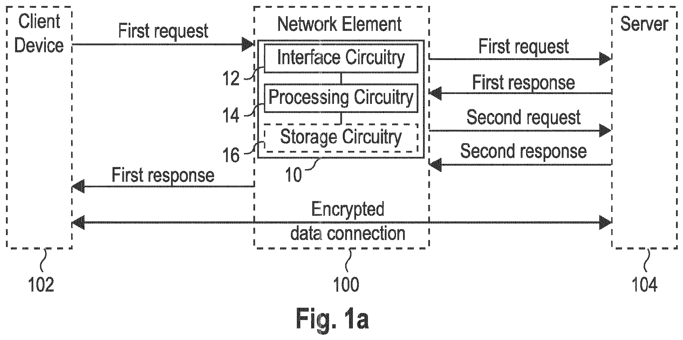

Fig. 1a shows a schematic diagram of an example of an apparatus 10 or device 10 for a network element 100. The apparatus 10 comprises circuitry to provide the functionality of the apparatus 10. For example, the circuitry of the apparatus 10 may be configured to provide the functionality of the apparatus 10. For example, the apparatus 10 of Fig. 1a comprises interface circuitry 12, processing circuitry 14, (optional) storage circuitry 16 and (optional) memory circuitry 18. For example, the processing circuitry 14 may be coupled with the interface circuitry 12, with the storage circuitry 16 and with the memory circuitry 18. For example, the processing circuitry 14 may provide the functionality of the apparatus, in conjunction with the interface circuitry 12 (for exchanging information, e.g., with other components inside or outside the network element 100 comprising the apparatus or device 10, such as a client device 102 and a server 106), the storage circuitry 16 (for storing information, such as machine-readable instructions) and the memory circuitry 18 (for caching or buffering information). Likewise, the device 10 may comprise means for providing the functionality of the device 10. For example, the means may be configured to provide the functionality of the device 10. The components of the device 10 are defined as component means, which may correspond to, or implemented by, the respective structural components of the apparatus 10. For example, the device 10 of Fig. 1a comprises means for processing 14, which may correspond to or be implemented by the processing circuitry 14, means for communicating 12, which may correspond to or be implemented by the interface circuitry 12, (optional) means for storing information 16, which may correspond to or be implemented by the storage circuitry 16 and (optional) memory 18, which may correspond to or be implemented by the memory circuitry 18. In general, the functionality of the processing circuitry 14 or means for processing 14 may be implemented by the processing circuitry 14 or means for processing 14 executing machine-readable instructions. Accordingly, any feature ascribed to the processing circuitry 14 or means for processing 14 may be defined by one or more instructions of a plurality of machine-readable instructions. The apparatus 10 or device 10 may comprise the machine-readable instructions, e.g., within the storage circuitry 16 or means for storing information 16.

The processing circuitry 14 or means for processing 14 is to obtain a first request to establish an encrypted data connection between the client device 102 and the server 104 from the client device. The processing circuitry 14 or means for processing 14 is to forward the first request to the server. The processing circuitry 14 or means for processing 14 is to obtain a first response from the server, with the first response being based on the first request. The processing circuitry 14 or means for processing 14 is to provide a second request to establish an encrypted data connection to the server. The processing circuitry 14 or means for processing 14 is to obtain a second response from the server, with the second response being based on the second request. The processing circuitry 14 or means for processing 14 is to determine an application categorization for the encrypted data connection between the client device and the server based on the second response. The processing circuitry 14 or means for processing 14 is to handle the encrypted data connection between the client and the device based on the application categorization.

Fig. 1a further shows the network element 100 comprising such an apparatus 10 or device 10, and a system comprising such a network element 10 and at least one of the client device 102 and the server 106. For example, the network element may be a network element (or network element) performing a user-plane function in a 5G network. Alternatively (or additionally), the network element may be one of a firewall, a load balancer, a security gateway, or a lawful interception entity (for lawfully intercepting network traffic).

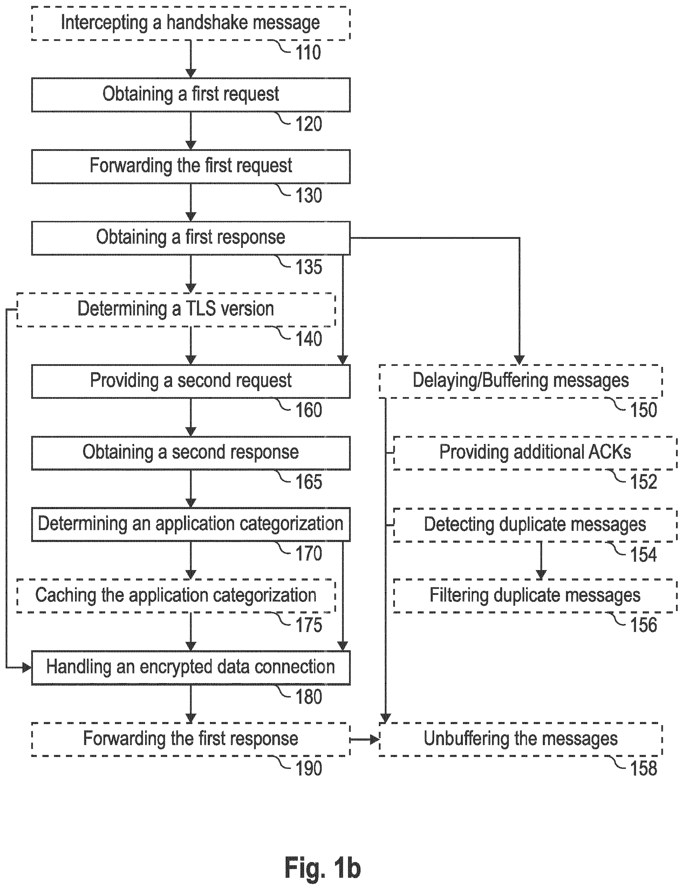

Fig. 1b shows a flow chart of an example of a corresponding method for a network element, such as the network element 100. The method comprising obtaining 120 the first request to establish an encrypted data connection between the client device 102 and the server 104 from the client device. The method comprises forwarding 130 the first request to the server. The method comprises obtaining 135 the first response from the server, with the first response being based on the first request. The method comprises providing 160 the second request to establish an encrypted data connection to the server. The method comprises obtaining 165 the second response from the server, with the second response being based on the second request. The method comprises determining 170 the application categorization for the encrypted data connection between the client device and the server based on the second response. The method comprises handling 180 the encrypted data connection between the client and the device based on the application categorization. For example, the method may be performed by the network element 100, e.g., by the apparatus 10 or device 10.

In the following, the functionality of the apparatus 10, the device 10, the method and of a corresponding computer program is illustrated with respect to the apparatus 10. Features introduced in connection with the apparatus 10 may likewise be included in the corresponding device 10, method and computer program.

Various examples of the present disclosure relate to application detection, which is the process of identifying the applications that are being used in a network. It can be done by examining network traffic or by analyzing network activity. Application detection is deemed important because it allows network administrators to determine which applications are in use, which can be used improve network performance, enforce security policies, and monitor network usage.

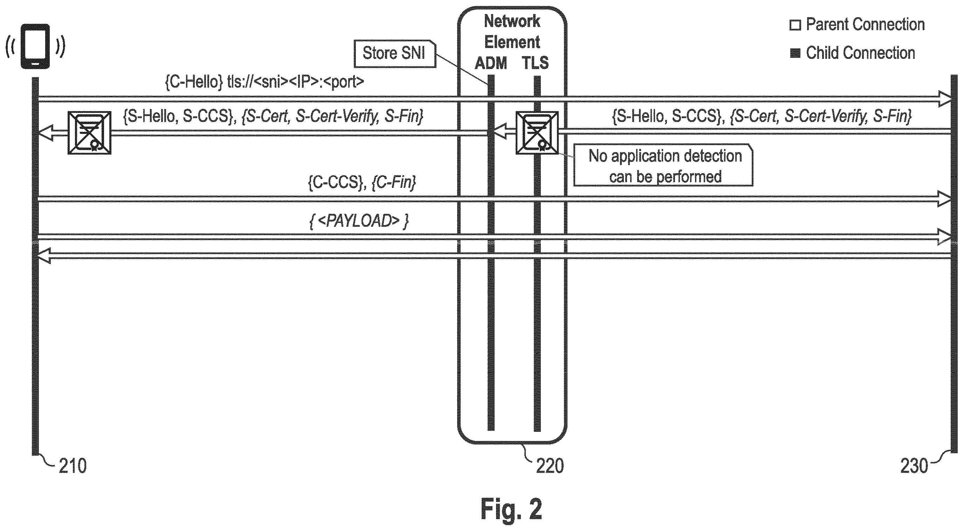

For example, application detection is being used as part of the 5G UPF. In cellular networks, such as 5G networks, application detection is, for example, used for setting up or reusing communication bearers, applying Quality of Service (QoS) settings, and for charging functions. However, application detection can also be performed by firewalls, load balancers, security gateways or lawful interception appliances. While application detection is a technique that has long been performed, it is made more difficult by the use of encrypted data connection. In particular, transport encryption, e.g., transport encryption based on Transport Layer Security (TLS), makes application detection harder. For example, the encrypted data connection between the client device and the server may be a Transport Layer Security, TLS, encrypted data connection. In particular, TLS 1.3 has made it harder to perform application detection, as the TLS Server Certificate message, which was previously a clear-text message, and which is commonly used for application detection, is now encrypted as part of the TLS 1.3 handshake. For example, in many cases, the Server Name Indicator (SNI) of the Client Hello message, the Subject Common Name of the Server Certificate message and the Subject Alternative Name of the Server Certificate message are used for application detection. As shown in Fig. 2, the Server Certificate message is now encrypted in TLS 1.3, which hinders extraction of the relevant fields. However, similar tendencies exist in other transport encryption schemes, so that the application of the proposed concept is not limited to TLS connections.

The proposed concept is applied at time of connection establishment, i.e., when the client attempts to establish the encrypted data connection to the server. The relevant messages, i.e., the first and second request, and the first and second response, are part of the handshake to establish the respective encrypted data connection. Accordingly, the first request and the second request may be TLS Client Hello handshake messages (or similar messages of other transport encryption protocols).

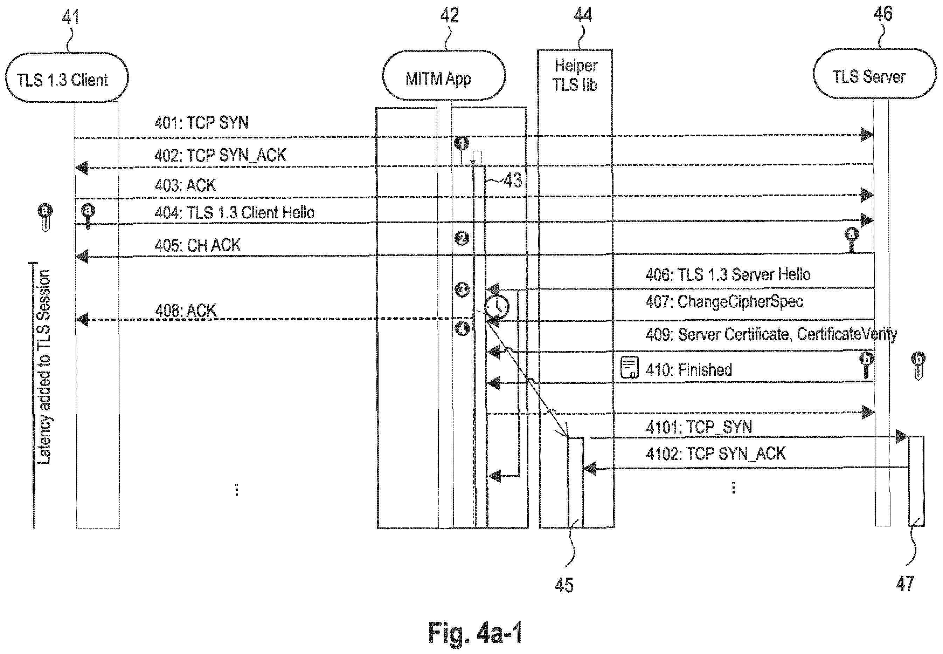

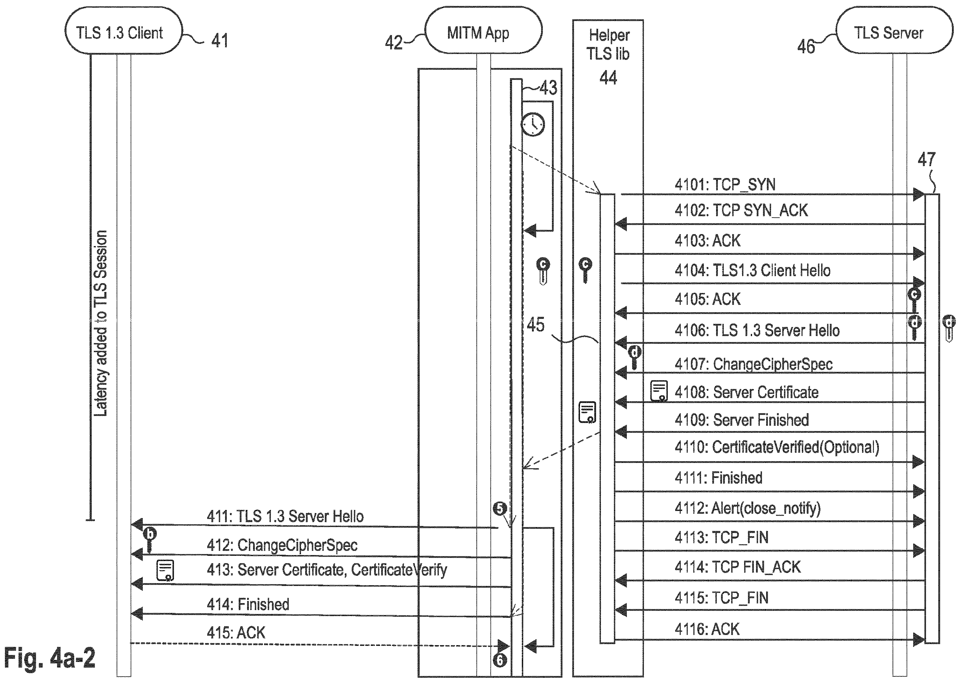

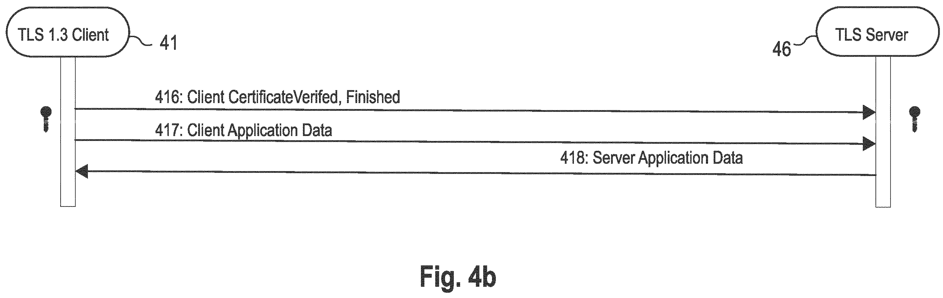

The process starts by obtaining the first request to establish the encrypted data connection between the client device 102 and the server 104 from the client device, which triggers the application detection procedure. For example, the client device 102 may be any type of device that communicated with the server 104 via the network element 100. The server 104 may be any kind of (physical or virtual) server or server function that offers to serve a functionality to client devices via encrypted data connection. For the purpose of obtaining the first request, the initial handshake message (after Transmission Control Protocol session establishment, see Fig. 4) of the TLS handshake may be intercepted to obtain the first request. In other words, the processing circuitry may intercept a handshake message of the TLS encrypted data connection to obtain the first request. Accordingly, as further shown in Fig. 1b, the method may comprise intercepting 110 the handshake message of the TLS encrypted data connection to obtain the first request. This may be done at layers 4/5 (transport layer/session layer) of the ISO/OSI model. For example, the handshake message may be a layer five Secure Sockets Layer (SSL)/TLS, handshake message. SSL (Secure Sockets Layer) and TLS (Transport Layer Security) both provide secure communication over the internet, but TLS is its successor and is considered more secure. The handshake message may be intercepted at layer 4 of the communication between the client device and the server.

The processing circuitry may process the first request, in particular to extract the relevant information for preparing the subsequent second request, such as a destination internet protocol address, a destination port and a destination server name indicator (SNI) included in the first request. In addition, the first request is forwarded to the server, which may trigger setup of a session for the encrypted data connection between the client device 102 and the server 104 at the network element 100 (see session 43 in Figs. 4a-1, 4a-2, 4b). The server responds with the first response, which is based on the first request. This first response may comprise one or more messages, such as, in TLS 1.3 communication, clear-text Server Hello and Server Change Cipher Spec messages, and encrypted Server Certificate, Server Certificate Verify and Server Finished. In particular, the Server Certificate message would be of interest for the purpose of application detection. However, since it is encrypted, it cannot be used for the purpose of application detection. In other words, the first response may be at least partially encrypted, and cannot be decrypted by the server entity.

However, not all first responses (e.g., Server Certificate messages contained therein) are encrypted. Even if a client device 1.3 requests to establish the encrypted data connection according to TLS 1.3 (or later), some servers do not support TLS 1.3, and will respond with a Server Change Cipher Spec message that tells the client device to establish the encrypted data connection according to TLS 1.2 (or earlier). In this case, the techniques introduced by the proposed concept are not necessary, and application detection may be performed without sending the second request. To handle both cases, the TLS version used by the server 106 may be determined. For example, the processing circuitry may determine a TLS version of the encrypted data connection, and to provide the second request if the TLS version matches a criterion. Accordingly, as shown in Fig. 1b, the method may comprise determining 140 a TLS version of the encrypted data connection, and providing the second request if the TLS version matches a criterion. The TLS version of the encrypted data connection may be determined based on the first response (e.g., based on the Server Change Cipher Spec message) and/or based on the first request (e.g., based on the Client Hello) message. For example, the second request may be provided if the TLS version is at least TLS 1.3. Providing the second request and obtaining the second response may be foregone if the TLS version is at most TLS 1.2. In the latter case, the application categorization (i.e., the application detection) may be determined based on at least one of the first request and the first response.

If the first response is at least partially encrypted, i.e., if the TLS version is at least 1.3, the second request is provided to the server 106. As the goal is to obtain at least some of the encrypted information contained in the first response, the second request may be based on the same TLS version as the first request. Accordingly, at least the second request may be based on TLS having a version of at least 1.3. In general, the second request may be generated by "cloning" the first request. For example, the processing circuitry may generate the second request based on at least one of (e.g., the combination of) the destination internet protocol address, the destination port and the destination server name indicator included in the first request, which have been extracted from the first request.

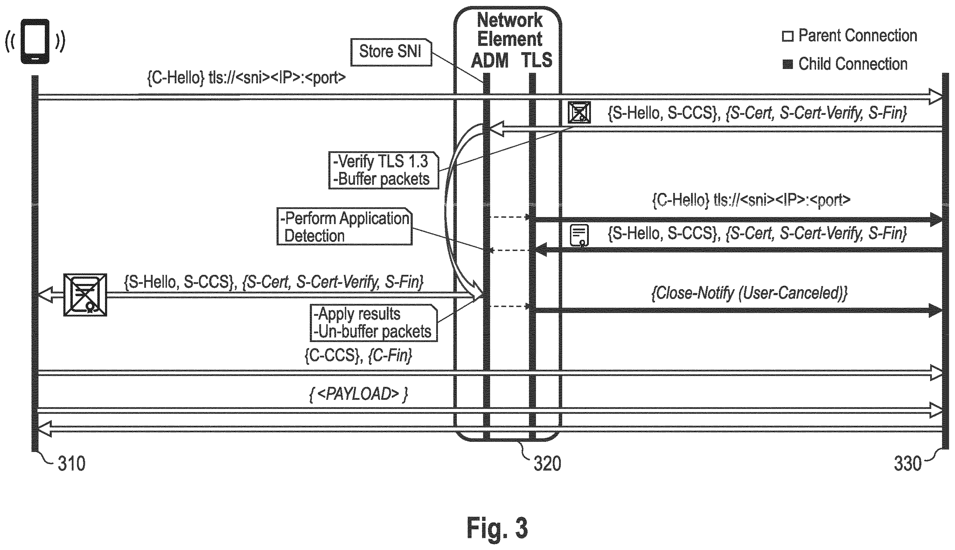

To make sure that the encrypted data connection is not affected by the second request, a separate Transmission Control Protocol (TCP) and separate TLS session may be established between the network element 100 (e.g., the apparatus 10/device 10) and the server 104, which is separate from the TCP session and TLS session established between the client device 102 and the server 104. In other words, a separate TCP connection and a separate encrypted data connection may be established for providing the second request and obtaining the second response. For example, the determination of the application categorization for the encrypted data connection between the client device and the server may be based on the separate encrypted data connection. In connection with Figs. 3 and 4, this connection is also denoted "child connection" or "child TLS session", with the TCP connection/TLS session between the client device and the server being the "parent connection" or "parent TLS session". In other words, the encrypted data connection between the network element 100 (e.g., the apparatus 10/device 10) and the server 104 is different from the encrypted data connection between the client device 102 and the server 104. In this context, the term encrypted data connection may refer to the TLS session between the respective entities.

As part of the connection establishment of the encrypted data connection between the network element 100 (e.g., the apparatus 10/device 10) and the server 104, the second response is obtained (e.g., received) from the server 104, which is based on the second request. This second response is similar to the first response (in terms of messages contained therein, see Figs. 3 and 4a-1, 4a-2). However, since it is directed at the network element, it can be decrypted by the network element (e.g., the apparatus 10/device 10), and used for the purpose of application detection. The processing circuitry is to determine the application categorization for the encrypted data connection between the client device and the server based on the second response. For example, as outlined above, the processing circuitry may determine the application categorization for the encrypted data connection between the client device and the server based on a server certificate (e.g., the TLS Server Certificate message) included in the second response. For example, with respect to TLS (or SSL), the processing circuitry may determine the application categorization for the encrypted data connection between the client device and the server based on a subject common name and/or subject alternative name of the server certificate included in the second response. After obtaining the second response, the processing circuitry may (gracefully) close the encrypted data connection between the network element 100 (e.g., apparatus 10/device 10) and the server 104.

The first response may then be forwarded to the client device based on the application categorization (e.g., handled according to the application categorization). Accordingly, as shown in Fig. 1b, the method may comprise forwarding 190 the first response based on the application categorization.

In addition to determining the application categorization, the second response may also be used to determine the authenticity of the server. For example, the processing circuitry may determine the authenticity of the server based on the second response, e.g., by checking/validating the server certificate.

To avoid having to perform the above procedure for each and every encrypted data connection (being based on TLS 1.3 or later), caching may be used. For example, the processing circuitry may cache the application categorization for a given combination of two or more of the destination internet protocol address, the destination port and the destination server name indicator (e.g., combination of internet protocol address and server name indicator, or internet protocol address, port and server name indicator) included in the first request using memory circuitry 18 of the apparatus 10. Accordingly, as shown in Fig. 1b, the method may comprise caching 175 the application categorization for a given combination of two or more of the destination internet protocol address, the destination port and the destination server name indicator included in the first request using memory circuitry. The application categorization of subsequently established encrypted data connections may be determined (further) based on the cached application categorization (e.g., to avoid having to establish the child connection).

In some scenarios, such as in application detection in the 5G UPF, it may be desirable to know the application categorization before any payload data is transmitted via the encrypted data connection, e.g., for bearer management or for charging the traffic. Therefore, establishment of the encrypted data connection between the client device 102 and the server 104 may be delayed by the network element 100 (e.g., the apparatus 10/device 10), by forwarding the first response only after the application categorization is determined and the encrypted data connection can be handled accordingly. To avoid loss of data, the packets/messages transmitted by the server 104 may be buffered by the network element 100 (e.g., apparatus 10), e.g., using the memory 18 of the network element 100/apparatus 10. For example, the processing circuitry may buffer the first response, and forward the first response after determining the application categorization. Accordingly, as further shown in Fig. 1b, the method may comprise buffering 150 the first response, and forwarding 190 the first response after determining the application categorization. More generally, the processing circuitry may buffer and/or delay the delivery of messages of the server provided for the client device until the application categorization is determined. Accordingly, the method may comprise buffering and/or delaying 150 the delivery of messages of the server provided for the client device until the application categorization is determined. Once the application categorization is determined, the messages/packets can be unbuffered (i.e., forwarded, removed from the buffer after they have been sent on), without alterations. Accordingly, as shown in Fig. 1b, the method may comprise unbuffering 158 messages provided by the server for the client device once the application categorization is determined without altering the messages.

By buffering and delaying the messages, the TCP state machines of both the client device 102 and the server 104 may become confused, as both client and server expect responses by the respective other parties within a pre-defined time interval. If the setup of the child connection and determination of the application categorization takes longer than this time interval, both the client device 102 and the server 104 may attempt to retransmit their respective messages, as they assume that packet loss has occurred. When the respective messages finally arrive after buffering, the timeouts or retransmission may be at odds with the forwarded messages. For this reason, some additional measures may be taken. For example, to avoid timeouts, additional acknowledgement message(s) may be provided by the network element 100 (e.g., apparatus 10/device 10). For example, the processing circuitry may provide one or more additional acknowledgement messages to at least one of the client and the server while buffering the first response to avoid a TCP timeout or retransmission at at least one of the client and the server. Accordingly, the method may comprise providing 152 one or more additional acknowledgement messages to at least one of the client and the server while buffering the first response to avoid a TCP timeout or retransmission at at least one of the client and the server. For example, in Fig. 4, this is shown in connection with ACK (acknowledgement) messages sent at 408 and after 410 (see the respective dotted lines in Fig. 4).

Once the messages are unbuffered, some of the messages sent by the client device 102 and/or the server 104 may have been made redundant by the acknowledgement messages sent by the network element (or apparatus 10/device 10). Such messages may be filtered out to avoid further degradation of the TCP state machines. For example, the processing circuitry may detect duplicate messages sent between the client and the server while and after buffering the first response and filter the duplicate messages to avoid degradation of a TCP state machine at at least one of the client and the server. Accordingly, the method may comprise detecting 154 duplicate messages sent between the client and the server while and after buffering the first response and filtering 156 the duplicate messages to avoid degradation of a TCP state machine at at least one of the client and the server. For example, in Fig. 4, this is shown in connection with the ACK (acknowledgement) message sent at 415.

The processing circuitry then handles the encrypted data connection between the client and the device based on the application categorization. While handling the encrypted data connection, the integrity of the encrypted data connection may be preserved, as the network element 100 has been able to determine the application categorization without decrypting the encrypted data connection. Accordingly, the processing circuitry may handle the encrypted data connection without decrypting the encrypted data connection. To handle the encrypted data connection according to the application categorization, various parameters of the underlying data connection (e.g., TCP connection, bearer) may be adapted to the application categorization. For example, the act of handling the encrypted data connection may comprise applying one or more data connection parameters to the encrypted data connection between the client and the server based on the application categorization. For example, the one or more data connection parameters may be selected based on the application categorization. For example, the act of handling the encrypted data connection may comprise selecting at least one of a connection bearer, a Quality of Service, QoS, setting, and a charging function (primarily relevant for the context of 5G UPF) for the subsequent communication based on the application categorization.

The interface circuitry 12 or means for communicating 12 may correspond to one or more inputs and/or outputs for receiving and/or transmitting information, which may be in digital (bit) values according to a specified code, within a module, between modules or between modules of different entities. For example, the interface circuitry 12 or means for communicating 12 may comprise circuitry configured to receive and/or transmit information.

For example, the processing circuitry 14 or means for processing 14 may be implemented using one or more processing units, one or more processing devices, any means for processing, such as a processor, a computer or a programmable hardware component being operable with accordingly adapted software. In other words, the described function of the processing circuitry 14 or means for processing may as well be implemented in software, which is then executed on one or more programmable hardware components. Such hardware components may comprise a general-purpose processor, a Digital Signal Processor (DSP), a micro-controller, etc.

For example, the storage circuitry 16 or means for storing information 16 may comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

For example, the memory circuitry 18 may be random access memory, such as dynamic random-access memory (DRAM), e.g., DRAM being part of a Dual Inline Memory Module (DIMM) or DRAM being part of High Bandwidth Memory. Alternatively, the memory circuitry 18 may be persistent memory, e.g., persistent memory being part of a DIMM.

More details and aspects of the apparatus, device, method, computer program, network entity and system are mentioned in connection with the proposed concept, or one or more examples described above or below (e.g., Fig. 2 to 4). The apparatus, device, method, computer program, network entity and system may comprise one or more additional optional features corresponding to one or more aspects of the proposed concept, or one or more examples described above or below.

Various examples of the present disclosure relate to a mechanism for decrypting and decoding server certificate in TLS 1.3 by a MIM (man in the middle) user-plane function for the purpose of application detection.

The proposed concept provides a methodology for evaluating an encrypted part of a TLS 1.3 (or later) connection handshake for the purposes of identifying the application or servers that the connection will be established to.

The proposed concept may negate the need to establish a form of full forward proxy by the entity attempting to do application detection. It may further negate the need to install trust certificates for the entity doing application detection on all client machines. Moreover, no attempt is made to degrade the security level of the original TLS session. The proposed concept provides a means for performing application detection on TLS 1.3. It may be detected using network interface monitoring (e.g., using Wireshark).

The proposed concept allows for application detection to be performed by a network element, without comprising the security of the connection. Year on year more traffic across the internet is encrypted using TLS1.3 (or later), so the proposed concept is a valuable mechanism for providers wishing to perform application Detection on their network traffic.

While an area of focus of the proposed concept is the 3GPP 5G UPF, the proposed concept has broader applications in the areas of firewalls, load balancers, security gateways and lawful interception.

All or most internet protocols have certain are identifiers present in the handshake phase of the connection establishment that can indicate what the service is or where the connection is being established to. This forms a fundamental part of "application detection". In TLS, these identifiers are contained, for example, in the following fields: In the Server Name Indicator (SNI) of the Client Hello message, in the Subject Common Name of the Server Certificate message and in the Subject Alternative Name of the Server Certificate message.

In TLS 1.2, the Server Certificate message is "in cleartext", i.e., it is not encrypted while travelling through the network, and therefore these identifiers may be extracted by a Network Element (NE), also denoted network element in connection with Figs. 1a to 1b, doing "Application Detection". However, in TLS 1.3, the handshake is encrypted and by the time the Server Certificate is sent, the NE doing Application Detection has no means to view the required identifiers within the Server Certificate message.

Fig. 2 shows a diagram of a conventional communication between a TLS 1.3 client and a TLS server via a network element. Fig. 2 shows a client device 210 (e.g., a smartphone), a network element 220, which includes an application detection management (ADM) functionality and a TLS functionality, and a server 230. The client device 210 sends a Client Hello message (according to tls://<sni><IP (Internet Protocol address)>:<port>) to the server 230, of which the ADM functionality intercepts and stores the SNI (Server Name Indicator). The server 230 responds with the clear-text Server Hello, and Server Change Cipher Spec messages, and with encrypted Server Certificate, Server Certificate Verify and Server Finished messages (indicated by the cursive font). As the Server Certificate message is encrypted, no application detection can be performed. The client device 210 responds with the clear-text Client Change Cipher Spec message and the encrypted Client Finished message, followed by an exchange of payload between the client device 210 and the server 230.

In the proposed concept, a duplicate TLS connection to the same server is created with the NE as the client in the communication. As it is an active participant in this "child" connection (i.e., it is the client in the client/server connection), the NE can decode the Server Certificate information as it uses the Certificate as part of the connection establishment.

Fig. 3 shows a diagram of a communication between a TLS 1.3 client and a TLS server via a network element according to an example of the proposed concept. Fig. 3 also a client device 310, a network element 320, which includes an ADM functionality and a TLS functionality, and a server 230. The client device 310 sends a Client Hello message (e.g., the first request discussed in connection with Figs. 1a and/or 1b) according to tls://<sni><IP>:<port>) to the server 330, of which the ADM intercepts and stores the SNI (Server Name Indicator). The server 330 responds with the clear-text Server Hello, and Server Change Cipher Spec messages, and with encrypted Server Certificate, Server Certificate Verify and Server Finished messages (which may comprise the first response). The ADM functionality verifies that the TLS version is 1.3 (or later), e.g., based on the clear-text Server Change Cipher Spec message and buffers the packets/messages. Upon detecting the establishment of a TLS 1.3 connection, the Network Element 320 uses relevant information from the original Client Hello, namely the destination IP address, (optionally) the destination TCP port, and the Server Name Indicator to create a child duplicate connection to the server. The TLS functionality then creates the child connection, using the same tls://<sni><IP>:<port> (e.g., the second request) that was used by the client device 310 to establish the parent connection. The server 330 responds with the clear-text Server Hello, and Server Change Cipher Spec messages, and with encrypted Server Certificate, Server Certificate Verify and Server Finished messages (e.g., the second response). The ADM functionality uses the Server Certificate message of the child connection to perform application detection. In this manner, using the information obtained in the decrypted child connection, the NE can apply the result of the "Application Detection" from the child connection to the original connection. Then, the ADM applies the results of the application detection, and un-buffers the packets, forwarding the Server Hello, Server Change Cipher Spec, Server Certificate, Server Certificate Verify and Server Finished messages of the parent connection (e.g., the first response) to the client device 310. The client device 310 responds with the clear-text Client Change Cipher Spec message and the encrypted Client Finished message, followed by an exchange of payload between the client device 310 and the server 330.

The mapping of SNI to server certificate is guaranteed to be the same between subsequent certificate downloads while the certificate is still valid (according to RFC (Request for Comments) 8446), so the information obtained in the "child" connection is valid and usable for the parent connection.

The proposed concept negates the need for a full forward proxy, does not compromise the security of the connection between client and server, does not require a trust certificate to be installed on client machines, and saves a large amount of compute and accelerator resources.

The diagram shown in Fig. 3 shows a high-level flow diagram of the Network Element in the middle, which does Application Detection, and which pauses the flow between the client device and the server and resumes it after application detection through its included TLS library. To pause and resume the flow, the TCP (Transmission Control Protocol) states of both ends may be taken into account. To pause and resume the TCP connection, some additional actions may be taken, which are described in the following and in connection with Figs. 4a-1, 4a-2 and 4b, which includes the corresponding TCP stream sequences along with TLS handshake events.

To pause the TCP flow, the NE may take care of the TCP_ACK of the byte streams transmitted from either end. As the Server Hello and subsequent streams are buffered by the NE, the receipt of the Server Hello and subsequent packets/streams may be acknowledged by a MITM App (42 in Figs. 4a-1, 4a-2 and 4b) to the server end point to stop retransmission from the server. If the Client Hello is acknowledged implicitly by the Server Hello, then the Client Hello stream nay be acknowledged, too, by the MITM App, using a separate ACK only event. A reordering of multiple streams may be done for Hello detection and other subsequent packets, and necessary acknowledgements may be transmitted. After un-pausing the flow, any TCP ACKs generated by the client for which ACKs are generated may be dropped to stop any sequence mismatch at the server end point. A graceful closure of the child flow may be performed to clear the TLS context resources used. Other abnormal state changes like RST (Reset), FIN (Finished) during flow pause state may be handled properly, including corner cases. To avoid extra connection load on servers, other measures such as session resumption, caching etc. may be adapted.

Figs. 4a-1, 4a-2 and 4b show a more detailed diagram of a communication between a TLS 1.3 client and a TLS server via a network element according to an example of the present disclosure. At 401, a TCP SYN packet is sent by a TLS 1.3 Client 41 to a TLS Server 46. At 402, a TCP SYN_ACK packet is sent by the TLS Server 46 to the TLS 1.3 Client 41. A session 43 is established by Man-In-The-Middle (MITM) App 42. For example, MITM App 42 may, in combination with Helper TLS library 44, correspond to or be implemented by the apparatus 10 or device 10 introduced in connection with Figs. 1a to 1b. At 403, an ACK packet is sent by the TLS 1.3 Client 41 to the TLS Server 46. At 404, a TLS 1.3 Client Hello is sent by the TLS 1.3 Client 41 to the TLS Server 46, based on cryptographic certificate (a). At 405, a CH ACK packet is sent by the TLS Server 46 to the TLS 1.3 Client 41. At 406, a TLS 1.3 Server Hello message sent by the TLS Server 46 is intercepted by the session 43 of the MITM app 42, and a timer is started (e.g., for 100 msec) for reassembling and buffering, as the MITM App 42 cannot decrypt the server-finished handshake. The Server Hello packet (and subsequent packets) is/are buffered by the MITM app 42. For example, all packets may be buffered (until timer expiry) if the Server Hello is correct or until the event returns. At 407, a Change Cipher Spec message by the TLS Server 46 is intercepted by the session 43 of the MITM app 42 and buffered. At 408, optionally, an ACK packet is sent by the MITM App 42 to the TLS 1.3 Client 41 (e.g., if the TLS Server 46 sent out a CH ACK). The TCP_ACK may be created (on behalf of client Internet Protocol Port) for the last byte received. At 409, a Server Certificate, Certificate Verify message, which is based on cryptographic certificate (b), by the TLS Server 46 is intercepted by the session 43 of the MITM app 42 and buffered. At 410, a Finished message by the TLS Server 46 is intercepted by the session 43 of the MITM app 42 and buffered.

After determining, that the TLS Server is trying to establish a TLS 1.3 session, based on the TLS 1.3 Server Hello, a new session 45 is created at a helper TLS library 44 to set up and handle a child TLS session. The SAN (Server Alternative Name) information (e.g., Internet Protocol address, port number, Server Name Indication, WK information, flow identifier) may be obtained to create the child TLS session.

At 4101, a TCP SYN packet is sent by the session 45 of the TLS library 44 to the TLS Server 46, thereby establishing a separate session 47 at the TLS Server 46. At 4102, TCP SYN_ACK packet is sent by session 47 at the TLS Server 46 to session 45 at the helper TLS library 44. Continuing in Fig. 4a-2, at 4103, an ACK packet is sent by session 45 at the helper TLS library 44 to session 47 at the TLS Server 46. At 4104,a TLS 1.3 Client Hello message is sent by session 45 at the helper TLS library 44 to session 47 at the TLS Server 46, based on cryptographic certificate (c). At 4105, an ACK packet is sent by session 47 at the TLS Server 46 to session 45 at the helper TLS library 44. At 4106, a TLS 1.3 Server Hello message is sent by session 47 at the TLS Server 46 to session 45 at the helper TLS library 44, based on cryptographic certificate (d). At 4107, a Change Cipher Spec message is sent by session 47 at the TLS Server 46 to session 45 at the helper TLS library 44. At 4108, a Server Certificate message is sent by session 47 at the TLS Server 46 to session 45 at the helper TLS library 44. The Server Certificate information (with the Server Alternative Name as cleartext) with Wk core information is returned asynchronously to the session 43 at the MITM App 42. At 4109, a Finished message is sent by session 47 at the TLS Server 46 to session 45 at the helper TLS library 44. Optionally, the Helper TLS library 44 can clean up the child TLS session. For this purpose, at 4110, an optional Certificate Verified message, at 4111, a Finished message, at 4112, an Alert(close_notify) message is sent by session 45 at the helper TLS library 44 to session 47 at the TLS Server 46. The session 47 at TLS Server 46 responds with a TCP FIN_ACK packet at 4114 and a TCP_FIN packet at 4115, followed by an ACK at 4116 sent by session 45 at Helper TLS library 44. After that, sessions 45 and 47 are terminated.

Based on the Server Certificate message sent at 4108, application detection is performed, a corresponding policy is applied, and the buffered packets are flushed to the TLS Client 41 as is. In particular, the TLS 1.3 Server Hello, Change Cipher Spec, Server Certificate, Certificate Verify and Finished messages received at 406, 407, 409 and 410 are unbuffered and forwarded, by the session 43 at the MITM App 42 by the TLS 1.3 Client 41 at 411, 412, 413 and 414. At 415, an ACK packet is optionally sent by TLS 1.3 Client 41 and discarded (e.g., filtered out) by session 43 at the MITM App 42 if the session 43 has already sent an ACK message after receiving the Finished message at 410 (indicated by the dotted line below the Finished message at 410).

Continuing into Fig. 4b (which continues the flow of Figs. 4a-1, 4a-2, albeit without showing the MITM App 42 and the Helper TLS library 44), at 416, a Client Certificate Verified, Finished message, and, at 417, a Client Application Data message is sent by TLS 1.3 Client 41 to TLS Server 46, which responds with Server Application Data 418. Note that session 43 at MITM App 42 persists during the communication at 416-418 between the TLS 1.3 Client 41 and the TLS Server 46.

More details and aspects of the mechanism for decrypting and decoding server certificate in TLS 1.3 by a MIM user-plane function are mentioned in connection with the proposed concept, or one or more examples described above or below (e.g., Fig. 1a to 1b). The mechanism for decrypting and decoding server certificate in TLS 1.3 by a MIM user-plane function may comprise one or more additional optional features corresponding to one or more aspects of the proposed concept, or one or more examples described above or below.

In the following, some examples of the proposed concept are presented:
An example (e.g., example 1) relates to an apparatus (10) for a network element (100), the apparatus comprising interface circuitry (12), machine-readable instructions, and processing circuitry (14) to execute the machine-readable instructions to obtain a first request to establish an encrypted data connection between a client device (102) and a server (104) from the client device. The processing circuitry is to execute the machine-readable instructions to forward the first request to the server. The processing circuitry is to execute the machine-readable instructions to obtain a first response from the server, with the first response being based on the first request. The processing circuitry is to execute the machine-readable instructions to provide a second request to establish an encrypted data connection to the server The processing circuitry is to execute the machine-readable instructions to obtain a second response from the server, with the second response being based on the second request. The processing circuitry is to execute the machine-readable instructions to determine an application categorization for the encrypted data connection between the client device and the server based on the second response. The processing circuitry is to execute the machine-readable instructions to handle the encrypted data connection between the client and the device based on the application categorization.

Another example (e.g., example 2) relates to a previously described example (e.g., example 1) or to any of the examples described herein, further comprising that a separate Transport Control Protocol, TCP, connection, and a separate encrypted data connection is established for providing the second request and obtaining the second response, with the determination of the application categorization for the encrypted data connection between the client device and the server being based on the separate encrypted data connection.

Another example (e.g., example 3) relates to a previously described example (e.g., one of the examples 1 to 2) or to any of the examples described herein, further comprising that the processing circuitry is to execute the machine-readable instructions to handle the encrypted data connection without decrypting the encrypted data connection.

Another example (e.g., example 4) relates to a previously described example (e.g., one of the examples 1 to 3) or to any of the examples described herein, further comprising that the processing circuitry is to execute the machine-readable instructions to apply one or more data connection parameters to the encrypted data connection between the client and the server based on the application categorization.

Another example (e.g., example 5) relates to a previously described example (e.g., example 4) or to any of the examples described herein, further comprising that the processing circuitry is to execute the machine-readable instructions to select at least one of a connection bearer, a Quality of Service, QoS, setting, and a charging function for the subsequent communication based on the application categorization.

Another example (e.g., example 6) relates to a previously described example (e.g., one of the examples 1 to 5) or to any of the examples described herein, further comprising that the processing circuitry is to execute the machine-readable instructions to forward the first response to the client device based on the application categorization.

Another example (e.g., example 7) relates to a previously described example (e.g., one of the examples 1 to 6) or to any of the examples described herein, further comprising that the processing circuitry is to execute the machine-readable instructions to determine the application categorization for the encrypted data connection between the client device and the server based on a server certificate included in the second response.

Another example (e.g., example 8) relates to a previously described example (e.g., example 7) or to any of the examples described herein, further comprising that the processing circuitry is to execute the machine-readable instructions to determine the application categorization for the encrypted data connection between the client device and the server based on a subject common name and/or subject alternative name of the server certificate included in the second response.

Another example (e.g., example 9) relates to a previously described example (e.g., one of the examples 1 to 8) or to any of the examples described herein, further comprising that the first response is at least partially encrypted.

Another example (e.g., example 10) relates to a previously described example (e.g., one of the examples 1 to 9) or to any of the examples described herein, further comprising that the encrypted data connection between the client device and the server is a Transport Layer Security, TLS, encrypted data connection.

Another example (e.g., example 11) relates to a previously described example (e.g., example 10) or to any of the examples described herein, further comprising that the first request and the second request are TLS Client Hello handshake messages.

Another example (e.g., example 12) relates to a previously described example (e.g., one of the examples 10 to 11) or to any of the examples described herein, further comprising that the processing circuitry is to execute the machine-readable instructions to intercept a handshake message of the TLS encrypted data connection to obtain the first request.

Another example (e.g., example 13) relates to a previously described example (e.g., example 12) or to any of the examples described herein, further comprising that the handshake message is a layer five Secure Sockets Layer, SSL, and/or Transport Layer Security, TLS, handshake message, and wherein the handshake message is intercepted at layer 4 of a communication between the client device and the server.

Another example (e.g., example 14) relates to a previously described example (e.g., one of the examples 1 to 13) or to any of the examples described herein, further comprising that the processing circuitry is to execute the machine-readable instructions to determine a TLS version of the encrypted data connection, and to provide the second request if the TLS version matches a criterion.

Another example (e.g., example 15) relates to a previously described example (e.g., example 14) or to any of the examples described herein, further comprising that the processing circuitry is to execute the machine-readable instructions to provide the second request if the TLS version is at least TLS 1.3.

Another example (e.g., example 16) relates to a previously described example (e.g., example 15) or to any of the examples described herein, further comprising that the processing circuitry is to execute the machine-readable instructions to forego providing the second request and obtaining the second response if the TLS version is at most TLS 1.2, and to determine the application categorization based on at least one of the first request and the first response.

Another example (e.g., example 17) relates to a previously described example (e.g., one of the examples 10 to 16) or to any of the examples described herein, further comprising that at least the second request is based on TLS having a version of at least 1.3.

Another example (e.g., example 18) relates to a previously described example (e.g., one of the examples 1 to 17) or to any of the examples described herein, further comprising that the processing circuitry is to execute the machine-readable instructions to buffer the first response, and to forward the first response after determining the application categorization.

Another example (e.g., example 19) relates to a previously described example (e.g., example 18) or to any of the examples described herein, further comprising that the processing circuitry is to execute the machine-readable instructions to buffer and/or delay the delivery of messages of the server provided for the client device until the application categorization is determined.

Another example (e.g., example 20) relates to a previously described example (e.g., one of the examples 18 to 19) or to any of the examples described herein, further comprising that the processing circuitry is to execute the machine-readable instructions to unbuffer messages provided by the server for the client device once the application categorization is determined without altering the messages.

Another example (e.g., example 21) relates to a previously described example (e.g., one of the examples 18 to 20) or to any of the examples described herein, further comprising that the processing circuitry is to execute the machine-readable instructions to provide one or more additional acknowledgement messages to at least one of the client and the server while buffering the first response to avoid a Transmission Control Protocol, TCP, timeout or retransmission at at least one of the client and the server.

Another example (e.g., example 22) relates to a previously described example (e.g., one of the examples 18 to 21) or to any of the examples described herein, further comprising that the processing circuitry is to execute the machine-readable instructions to detect duplicate messages sent between the client and the server while and after buffering the first response and filtering the duplicate messages to avoid degradation of a TCP state machine at at least one of the client and the server.

Another example (e.g., example 23) relates to a previously described example (e.g., one of the examples 1 to 22) or to any of the examples described herein, further comprising that the processing circuitry is to execute the machine-readable instructions to generate the second request based on at least one of a destination internet protocol address, a destination port and a destination server name indicator included in the first request.

Another example (e.g., example 24) relates to a previously described example (e.g., example 23) or to any of the examples described herein, further comprising that the processing circuitry is to execute the machine-readable instructions to cache the application categorization for a given combination of two or more of the destination internet protocol address, the destination port and the destination server name indicator included in the first request using memory circuitry of the apparatus, and to determine the application categorization of subsequently established encrypted data connection further based on the cached application categorization.

Another example (e.g., example 25) relates to a previously described example (e.g., one of the examples 1 to 24) or to any of the examples described herein, further comprising that the processing circuitry is to execute the machine-readable instructions to determine an authenticity of the server based on the second response.

An example (e.g., example 26) relates to a network element (100) comprising the apparatus (10) according to one of the examples 1 to 25 (or according to any other example).

An example (e.g., example 27) relates to a system comprising the network element according to example 26 (or according to any other example) and at least one of the client device (102) and the server (104).

An example (e.g., example 28) relates to an apparatus (10) for a network element (100), the apparatus comprising processing circuitry (14) configured to obtain a first request to establish an encrypted data connection between a client device (102) and a server (104) from the client device. The processing circuitry is configured to forward the first request to the server. The processing circuitry is configured to obtain a first response from the server, with the first response being based on the first request. The processing circuitry is configured to provide a second request to establish an encrypted data connection to the server. The processing circuitry is configured to obtain a second response from the server, with the second response being based on the second request. The processing circuitry is configured to determine an application categorization for the encrypted data connection between the client device and the server based on the second response. The processing circuitry is configured to handle the encrypted data connection between the client and the device based on the application categorization.

An example (e.g., example 29) relates to a network element (100) comprising the apparatus (10) according to example 28 (or according to any other example).

An example (e.g., example 30) relates to a system comprising the network element according to example 29 (or according to any other example) and at least one of the client device (102) and the server (104).

An example (e.g., example 31) relates to a device (10) for a network element (100), the device comprising means for processing (14) for obtaining a first request to establish an encrypted data connection between a client device (102) and a server (104) from the client device. The means for processing is for forwarding the first request to the server. The means for processing is for obtaining a first response from the server, with the first response being based on the first request. The means for processing is for providing a second request to establish an encrypted data connection to the server. The means for processing is for obtaining a second response from the server, with the second response being based on the second request. The means for processing is for determining an application categorization for the encrypted data connection between the client device and the server based on the second response. The means for processing is for handling the encrypted data connection between the client and the device based on the application categorization.

An example (e.g., example 32) relates to a network element (100) comprising the device (10) according to example 31 (or according to any other example).

An example (e.g., example 33) relates to a system comprising the network element according to example 32 (or according to any other example) and at least one of the client device (102) and the server (104).

An example (e.g., example 34) relates to a method for a network element (100), the method comprising obtaining (120) a first request to establish an encrypted data connection between a client device (102) and a server (104) from the client device. The method comprises forwarding (130) the first request to the server. The method comprises obtaining (135) a first response from the server, with the first response being based on the first request. The method comprises providing (160) a second request to establish an encrypted data connection to the server. The method comprises obtaining (165) a second response from the server, with the second response being based on the second request. The method comprises determining (170) an application categorization for the encrypted data connection between the client device and the server based on the second response. The method comprises handling (180) the encrypted data connection between the client and the device based on the application categorization.

Another example (e.g., example 35) relates to a previously described example (e.g., example 34) or to any of the examples described herein, further comprising that the act of handling the encrypted data connection comprises applying one or more data connection parameters to the encrypted data connection between the client and the server based on the application categorization.

Another example (e.g., example 36) relates to a previously described example (e.g., example 35) or to any of the examples described herein, further comprising that the act of handling the encrypted data connection comprises selecting at least one of a connection bearer, a Quality of Service, QoS, setting, and a charging function for the subsequent communication based on the application categorization.

Another example (e.g., example 37) relates to a previously described example (e.g., one of the examples 34 to 36) or to any of the examples described herein, further comprising that the encrypted data connection between the client device and the server is a Transport Layer Security, TLS, encrypted data connection.

Another example (e.g., example 38) relates to a previously described example (e.g., one of the examples 43 to 44) or to any of the examples described herein, further comprising that the method comprises intercepting (110) a handshake message of the TLS encrypted data connection to obtain the first request.

Another example (e.g., example 39) relates to a previously described example (e.g., one of the examples 37 to 38) or to any of the examples described herein, further comprising that the handshake message is a layer five Secure Sockets Layer, SSL, and/or Transport Layer Security, TLS, handshake message, and wherein the handshake message is intercepted (110) at layer 4 of a communication between the client device and the server.

Another example (e.g., example 40) relates to a previously described example (e.g., one of the examples 37 to 39) or to any of the examples described herein, further comprising that the method comprises determining (140) a TLS version of the encrypted data connection, and to provide the second request if the TLS version matches a criterion.

Another example (e.g., example 41) relates to a previously described example (e.g., one of the examples 34 to 40) or to any of the examples described herein, further comprising that the method comprises buffering (150) the first response and forwarding the first response after determining the application categorization.

Another example (e.g., example 42) relates to a previously described example (e.g., example 41) or to any of the examples described herein, further comprising that the method comprises buffering and/or delaying (150) the delivery of messages of the server provided for the client device until the application categorization is determined.

Another example (e.g., example 43) relates to a previously described example (e.g., one of the examples 41 to 42) or to any of the examples described herein, further comprising that the method comprises unbuffering (158) messages provided by the server for the client device once the application categorization is determined without altering the messages.

Another example (e.g., example 44) relates to a previously described example (e.g., one of the examples 41 to 43) or to any of the examples described herein, further comprising that the method comprises providing (152) one or more additional acknowledgement messages to at least one of the client and the server while buffering the first response to avoid a Transmission Control Protocol, TCP, timeout or retransmission at at least one of the client and the server.

Another example (e.g., example 45) relates to a previously described example (e.g., one of the examples 41 to 43) or to any of the examples described herein, further comprising that the method comprises detecting (154) duplicate messages sent between the client and the server while and after buffering the first response, and filtering (156) the duplicate messages to avoid degradation of a TCP state machine at at least one of the client and the server.

Another example (e.g., example 46) relates to a previously described example (e.g., one of the examples 34 to 45) or to any of the examples described herein, further comprising that the method comprises caching (175) the application categorization for a given combination of two or more of the destination internet protocol address, the destination port and the destination server name indicator included in the first request using memory circuitry and determining the application categorization of subsequently established encrypted data connection further based on the cached application categorization.

An example (e.g., example 47) relates to a network element (100) to perform the method according to one of the examples 34 to 46 (or according to any other example).

An example (e.g., example 48) relates to a system comprising the network element according to example 47 (or according to any other example) and at least one of the client device (102) and the server (104).

An example (e.g., example 49) relates to a non-transitory machine-readable storage medium including program code, when executed, to cause a machine to perform the method of one of the examples 34 to 46 (or of any other example).

An example (e.g., example 50) relates to a computer program having a program code for performing the method one of the examples 34 to 46 (or of any other example) when the computer program is executed on a computer, a processor, or a programmable hardware component.

An example (e.g., example 51) relates to a machine-readable storage including machine readable instructions, when executed, to implement a method or realize an apparatus as claimed in any pending claim or shown in any example.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor, or other programmable hardware component. Thus, steps, operations, or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations, or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process, or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

The disclosed methods, apparatuses, and systems are not to be construed as limiting in any way. Instead, the present disclosure is directed toward all novel and nonobvious features and aspects of the various disclosed examples, alone and in various combinations and subcombinations with one another. The disclosed methods, apparatuses, and systems are not limited to any specific aspect or feature or combination thereof, nor do the disclosed examples require that any one or more specific advantages be present, or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus (10) for a network element (100), the apparatus comprising processing circuitry (14) configured to:
obtain a first request to establish an encrypted data connection between a client device (102) and a server (104) from the client device;
forward the first request to the server;
obtain a first response from the server, with the first response being based on the first request;
provide a second request to establish a different encrypted data connection to the server;
obtain a second response from the server, with the second response being based on the second request;
determine an application categorization for the encrypted data connection between the client device and the server based on the second response; and
handle the encrypted data connection between the client device and the server based on the application categorization.

2. The apparatus according to claim 1, wherein a separate Transport Control Protocol, TCP, connection, and a separate encrypted data connection is established for providing the second request and obtaining the second response, with the determination of the application categorization for the encrypted data connection between the client device and the server being based on the separate encrypted data connection.

3. The apparatus according to one of the claims 1 or 2, wherein the processing circuitry is configured to handle the encrypted data connection without decrypting the encrypted data connection.

4. The apparatus according to one of the claims 1 to 3, wherein the processing circuitry is configured to apply one or more data connection parameters to the encrypted data connection between the client and the server based on the application categorization.

5. The apparatus according to claim 4, wherein the processing circuitry is configured to select at least one of a connection bearer, a Quality of Service, QoS, setting, and a charging function for the subsequent communication based on the application categorization.

6. The apparatus according to one of the claims 1 to 5, wherein the processing circuitry is configured to forward the first response to the client device based on the application categorization.

7. The apparatus according to one of the claims 1 to 6, wherein the processing circuitry is configured to determine the application categorization for the encrypted data connection between the client device and the server based on a server certificate included in the second response.

8. The apparatus according to claim 7, wherein the processing circuitry is configured to determine the application categorization for the encrypted data connection between the client device and the server based on a subject common name and/or subject alternative name of the server certificate included in the second response.

9. The apparatus according to one of the claims 1 to 8, wherein the first response is at least partially encrypted.

10. The apparatus according to one of the claims 1 to 9, wherein the encrypted data connection between the client device and the server is a Transport Layer Security, TLS, encrypted data connection.

11. The apparatus according to claim 10, wherein the first request and the second request are TLS Client Hello handshake messages.

12. The apparatus according to one of the claims 10 or 11, wherein the processing circuitry is configured to intercept a handshake message of the TLS encrypted data connection to obtain the first request.

13. The apparatus according to one of the claims 1 to 12, wherein the processing circuitry is to execute the machine-readable instructions to determine a TLS version of the encrypted data connection, and to provide the second request if the TLS version matches a criterion.

14. A method for a network element (100), the method comprising:
obtaining (120) a first request to establish an encrypted data connection between a client device (102) and a server (104) from the client device;
forwarding (130) the first request to the server;
obtaining (135) a first response from the server, with the first response being based on the first request;
providing (160) a second request to establish a different encrypted data connection to the server;
obtaining (165) a second response from the server, with the second response being based on the second request;
determining (170) an application categorization for the encrypted data connection between the client device and the server based on the second response; and
handling (180) the encrypted data connection between the client device and the server based on the application categorization.

15. A computer program having a program code for performing the method of claim 14 when the computer program is executed on a computer, a processor, or a programmable hardware component.

## Patentansprüche

1. Einrichtung (10) für ein Netzwerkelement (100), wobei die Einrichtung eine Verarbeitungsschaltungsanordnung (14) umfasst, die zu Folgendem ausgelegt ist:
Erhalten einer ersten Anforderung zum Herstellen einer verschlüsselten Datenverbindung zwischen einer Client-Vorrichtung (102) und einem Server (104) von der Client-Vorrichtung;
Weiterleiten der ersten Anforderung an den Server;
Erhalten einer ersten Antwort von dem Server, wobei die erste Antwort auf der ersten Anforderung basiert;
Bereitstellen einer zweiten Anforderung zum Herstellen einer anderen verschlüsselten Datenverbindung mit dem Server;
Erhalten einer zweiten Antwort von dem Server, wobei die zweite Antwort auf der zweiten Anforderung basiert;
Bestimmen einer Anwendungskategorisierung für die verschlüsselte Datenverbindung zwischen der Client-Vorrichtung und dem Server basierend auf der zweiten Antwort; und
Handhaben der verschlüsselten Datenverbindung zwischen dem Client-Vorrichtung und dem Server basierend auf der Anwendungskategorisierung.

2. Einrichtung nach Anspruch 1, wobei eine separate Transport Control Protocol-Verbindung, TCP-Verbindung, und eine separate verschlüsselte Datenverbindung zum Bereitstellen der zweiten Anforderung und zum Erhalten der zweiten Antwort hergestellt werden, wobei die Bestimmung der Anwendungskategorisierung für die verschlüsselte Datenverbindung zwischen der Client-Vorrichtung und dem Server auf der separaten verschlüsselten Datenverbindung basiert.

3. Einrichtung nach einem der Ansprüche 1 oder 2, wobei die Verarbeitungsschaltungsanordnung dazu ausgelegt ist, die verschlüsselte Datenverbindung ohne Entschlüsseln der verschlüsselten Datenverbindung zu handhaben.

4. Einrichtung nach einem der Ansprüche 1 bis 3, wobei die Verarbeitungsschaltungsanordnung dazu ausgelegt ist, einen oder mehrere Datenverbindungsparameter auf die verschlüsselte Datenverbindung zwischen dem Client und dem Server basierend auf der Anwendungskategorisierung anzuwenden.

5. Einrichtung nach Anspruch 4, wobei die Verarbeitungsschaltungsanordnung dazu ausgelegt ist, mindestens eines von einem Verbindungsträger, einer Quality of Service-Einstellung, QoS-Einstellung, und einer Abrechnungsfunktion für die nachfolgende Kommunikation basierend auf der Anwendungskategorisierung auszuwählen.

6. Einrichtung nach einem der Ansprüche 1 bis 5, wobei die Verarbeitungsschaltungsanordnung dazu ausgelegt ist, die erste Antwort basierend auf der Anwendungskategorisierung an die Client-Vorrichtung weiterzuleiten.

7. Einrichtung nach einem der Ansprüche 1 bis 6, wobei die Verarbeitungsschaltungsanordnung dazu ausgelegt ist, die Anwendungskategorisierung für die verschlüsselte Datenverbindung zwischen der Client-Vorrichtung und dem Server basierend auf einem in der zweiten Antwort beinhalteten Serverzertifikat zu bestimmen.

8. Einrichtung nach Anspruch 7, wobei die Verarbeitungsschaltungsanordnung dazu ausgelegt ist, die Anwendungskategorisierung für die verschlüsselte Datenverbindung zwischen der Client-Vorrichtung und dem Server basierend auf einem allgemeinen Subjektnamen und/oder einem alternativen Subjektnamen des in der zweiten Antwort beinhalteten Serverzertifikats zu bestimmen.

9. Einrichtung nach einem der Ansprüche 1 bis 8, wobei die erste Antwort zumindest teilweise verschlüsselt ist.

10. Einrichtung nach einem der Ansprüche 1 bis 9, wobei die verschlüsselte Datenverbindung zwischen der Client-Vorrichtung und dem Server eine Transport Layer Securityverschlüsselte, TLS-verschlüsselte, Datenverbindung ist.

11. Einrichtung nach Anspruch 10, wobei die erste Anforderung und die zweite Anforderung TLS-Client-Hallo-Handshake-Nachrichten sind.

12. Einrichtung nach einem der Ansprüche 10 oder 11, wobei die Verarbeitungsschaltungsanordnung dazu ausgelegt ist, eine Handshake-Nachricht der TLSverschlüsselten Datenverbindung abzufangen, um die erste Anforderung zu erhalten.

13. Einrichtung nach einem der Ansprüche 1 bis 12, wobei die Verarbeitungsschaltungsanordnung die maschinenlesbaren Anweisungen ausführt, um eine TLS-Version der verschlüsselten Datenverbindung zu bestimmen, und die zweite Anforderung bereitstellt, falls die TLS-Version ein Kriterium erfüllt.

14. Verfahren für ein Netzwerkelement (100), wobei das Verfahren Folgendes umfasst:
Erhalten (120) einer ersten Anforderung zum Herstellen einer verschlüsselten Datenverbindung zwischen einer Client-Vorrichtung (102) und einem Server (104) von der Client-Vorrichtung;
Weiterleiten (130) der ersten Anforderung an den Server;
Erhalten (135) einer ersten Antwort von dem Server, wobei die erste Antwort auf der ersten Anforderung basiert;
Bereitstellen (160) einer zweiten Anforderung zum Herstellen einer anderen verschlüsselten Datenverbindung mit dem Server;
Erhalten (165) einer zweiten Antwort von dem Server, wobei die zweite Antwort auf der zweiten Anforderung basiert;
Bestimmen (170) einer Anwendungskategorisierung für die verschlüsselte Datenverbindung zwischen der Client-Vorrichtung und dem Server basierend auf der zweiten Antwort; und
Handhaben (180) der verschlüsselten Datenverbindung zwischen der Client-Vorrichtung und dem Server basierend auf der Anwendungskategorisierung.

15. Computerprogramm mit einem Programmcode zum Durchführen des Verfahrens nach Anspruch 14, wenn das Computerprogramm auf einem Computer, einem Prozessor oder einer programmierbaren Hardwarekomponente ausgeführt wird.

## Revendications

1. Appareil (10) d'un élément de réseau (100), l'appareil comprenant des circuits de traitement (14) configurés pour :
obtenir une première demande d'établissement d'une connexion de données chiffrée entre un dispositif client (102) et un serveur (104) à partir du dispositif client ;
transférer la première requête au serveur ;
obtenir une première réponse du serveur, la première réponse étant basée sur la première requête ;
fournir au serveur une deuxième demande pour établir une connexion de données chiffrée différente ;
obtenir une deuxième réponse du serveur, la deuxième réponse étant basée sur la deuxième requête ;
déterminer une catégorisation d'application pour la connexion de données chiffrée entre le dispositif client et le serveur sur la base de la deuxième réponse ; et
gérer la connexion de données chiffrée entre le dispositif client et le serveur sur la base de la catégorisation d'application.

2. Appareil selon la revendication 1, dans lequel une connexion au protocole de contrôle de transport, TCP, distincte et une connexion de données chiffrée distincte sont établies pour fournir la deuxième requête et obtenir la deuxième réponse, la détermination de la catégorisation d'application pour la connexion de données chiffrée entre le dispositif client et le serveur étant basée sur la connexion de données chiffrée distincte.

3. Appareil selon l'une des revendications 1 ou 2, dans lequel le circuit de traitement est configuré pour traiter la connexion de données chiffrée sans déchiffrer la connexion de données chiffrée.

4. Appareil selon l'une des revendications 1 à 3, dans lequel le circuit de traitement est configuré pour appliquer un ou plusieurs paramètres de connexion de données à la connexion de données chiffrée entre le client et le serveur sur la base de la catégorisation d'application.

5. Appareil selon la revendication 4, dans lequel les circuits de traitement sont configurés pour sélectionner au moins l'un d'un support de connexion, un paramètre de qualité de service, QoS, et une fonction de facturation pour la communication ultérieure sur la base de la catégorisation d'application.

6. Appareil selon l'une des revendications 1 à 5, dans lequel les circuits de traitement sont configurés pour transmettre la première réponse au dispositif client sur la base de la catégorisation d'application.

7. Appareil selon l'une des revendications 1 à 6, dans lequel les circuits de traitement sont configurés pour déterminer la catégorisation d'application pour la connexion de données chiffrée entre le dispositif client et le serveur sur la base d'un certificat de serveur inclus dans la deuxième réponse.

8. Appareil selon la revendication 7, dans lequel les circuits de traitement sont configurés pour déterminer la catégorisation d'application pour la connexion de données chiffrée entre le dispositif client et le serveur sur la base d'un nom commun du sujet et/ou d'un autre nom du sujet du certificat de serveur inclus dans la deuxième réponse.

9. Appareil selon l'une des revendications 1 à 8, dans lequel la première réponse est au moins partiellement chiffrée.

10. Appareil selon l'une des revendications 1 à 9, dans lequel la connexion de données chiffrée entre le dispositif client et le serveur est une connexion de données chiffrée au protocole de sécurité de la couche de transport, TLS.

11. Appareil selon la revendication 10, dans lequel la première requête et la deuxième requête sont des messages de liaison Hello du client TLS.

12. Appareil selon l'une des revendications 10 ou 11, dans lequel les circuit de traitement sont configurés pour intercepter un message de liaison de la connexion de données chiffrée TLS pour obtenir la première requête.

13. Appareil selon l'une des revendications 1 à 12, dans lequel les circuits de traitement sont destinés à exécuter les instructions lisibles par machine pour déterminer une version TLS de la connexion de données chiffrée, et à fournir la deuxième requête si la version TLS correspond à un critère.

14. Procédé pour un élément de réseau (100), le procédé comprenant :
l'obtention (120) d'une première demande d'établissement d'une connexion de données chiffrée entre un dispositif client (102) et un serveur (104) à partir du dispositif client ;
le transfert (130) de la première requête au serveur ;
l'obtention (135) d'une première réponse du serveur, la première réponse étant basée sur la première requête ;
la fourniture (160) au serveur d'une deuxième demande d'établissement d'une connexion de données chiffrée différente ;
l'obtention (165) d'une deuxième réponse du serveur, la deuxième réponse étant basée sur la deuxième requête ;
la détermination (170) d'une catégorisation d'application pour la connexion de données chiffrée entre le dispositif client et le serveur sur la base de la deuxième réponse ; et
la gestion (180) de la connexion de données chiffrée entre le dispositif client et le serveur sur la base de la catégorisation d'application.

15. Programme informatique ayant un code de programme pour l'exécution du procédé selon la revendication 14, lorsque le programme informatique est exécuté sur un ordinateur, un processeur ou un composant matériel programmable.
